# EUROPÄISCHE PATENTANMELDUNG

(11) **EP 0 531 652 A2**
(43) Veröffentlichungstag der Anmeldung: **17.03.1993**
(21) Anmeldenummer: 92111688.5
(22) Anmeldetag: 09.07.1992
(51) Int. Cl.: B29C 45/62, B29C 45/23, B29C 45/60

(54) **Plastifizierzylinder an einer Kunststoff-Spritzgiessmaschine**

(30) Priorität: 12.09.1991 DE 4130287
(71) Anmelder: Hehl, Karl, D-72290 Lossburg (DE)
(72) Erfinder: Hehl, Karl, D-72290 Lossburg (DE)
(74) Vertreter: Mayer, Friedrich E. (DE)

(57) **Zusammenfassung**

Ein beheizbarer Plastifizierzylinder (10) einer Kunststoff-Spritzgießmaschine besitzt einen beheizbaren Düsenkörper (11) und eine rotierbare Förderschnecke sowie einen Hochdruckraum (H) und einen die Förderschnecke (12) aufnehmenden Niederdruckraum (N). Der Plastifizierzylinder (10) ist durch einen Einsatz (14) verlängerbar, dessen rückseitige Anschlußorgane mit den am Plastifizierzylinder (10) für den Anschluß des Düsenkörpers (11) vorgesehenen Anschlußorganen in Verbindung stehen und den Anschlußorganen des Düsenkörpers entsprechen. Dabei vergrößert die Verlängerung zumindest den Niederdruckraum (N) des Plastifizierzylinders (10). Als Folge davon kann bei einem bekannten Plastifizierzylinder bedarfsweise ein Mehr an Energie auf einfache Weise zugeführt werden, ohne von der Leistung der Heizmanschetten abhängig zu sein.

## Beschreibung

Die Erfindung betrifft einen Plastifzierzylinder entsprechend dem Oberbegriff des Patentanspruches 1.

Unter 'Niederdruckraum' im Sinne des Oberbegriffes wird der während der Einspritzung des Kunststoffes in die Spritzgießform hinter einer Rückstromsperre befindliche Raum verstanden, der gegenüber dem Hochdruckraum hermetisch abgeschlossen ist. Das maximale Volumen des Hochdruckraumes ist durch eine 'maximale rückwärtige Ausgangslage' der Förderschnecke bestimmt. Von dieser Ausgangslage unterscheidet sich eine aktuelle rückwärtige Ausgangslage der Förderschnecke, die durch das jeweilige, für ein bestimmtes Spritzteil erforderliche Quantum an Kunststoff bestimmt ist.

Aus der DE 37 445 19 C1 ist es bekannt, die Verbindung zwischen dem Düsenkörper und dem Plastifizierzylinder mit Hilfe einer Verbindungsmuffe herzustellen, welche mit dem Plastifizierzylinder verschraubt werden kann und einen axialen Druck auf den Düsenkörper ausübt. Allerdings ist ein großer Kraftaufwand zum Lösen der Verbindungsmuffe erforderlich.

Aus der DE-PS 41 05 730 ist ein beheizbarer Plastifizierzylinder einer Kunststoff-Spritzgießmaschine mit beheizbarem Düsenkörper und rotierbarer Förderschnecke bekannt, die den plastifizierten Kunststoff in einen Hochdruckraum vor die zurückweichende Förderschnecke transportiert und durch einen axialen Hub über den Düsenkanal in die Spritzgießform einspritzt. Die Verbindung von Plastifizierzylinder und Düsenkörper erfolgt über eine Vielzahl von etwa auf einer Kreislinie angeordneten Gewindebolzen.

Dabei ist am Plastifizierzylinder eine den Plastifizierzylinder im düsenseitigen Bereich des Hochdruckraums umschließende und den Düsenkörper teilweise axial übergreifende Verbindungsmuffe befestigt und mit Innengewinden der Verbindungsmuffe in Eingriff stehende und dadurch axial abgestützte Gewindebolzen greifen stirnseitig an Preßflächen des Düsenkörpers an. Dadurch ist es möglich, den Düsenkörper schneller und mit geringem Kraftaufwand zu wechseln.

Bei bekannten Plastifizierzylindern und so auch beim Gegenstand der DE-PS 41 05 730 ist die wirksame Länge der Förderschnecke üblicherweise auf das 20-fache des Durchmessers der Förderschnecke begrenzt. Oft besteht jedoch der Bedarf, die Leistung der Spritzgießmaschine dadurch zu steigern, daß dem plastifizierten Kunststoff eine erhöhte Wärmeleistung zugeführt wird. Dies kann bei den bekannten Spritzgießmaschinen lediglich dadurch erreicht werden, daß den Heizmanschetten mehr Energie zugeführt wird. Aus verständlichen Gründen ist jedoch die Energiezuführung auf diese Weise nicht unbegrenzt möglich.

Ebensowenig wird die Erfindung durch eine an sich bekannte Plastifiziereinrichtung (US-PS 4,842,507) berührt, da dort zwar auch ein zweiteiliger Plastifizierzylinder vorgesehen ist, der jedoch ein gesondertes, rückwärtiges Zylinderteil mit geringerem Durchmesser und geringerer lichter Weite aufweist, das in ein gesondertes vorderes Zylinderteil größeren Durchmessers und größerer lichter Weite teleskopartig eintaucht. Dadurch läßt sich insbesondere ein einfacher, schnell zu bewirkender und sicherer Austausch der Düse durch einen Einsatz nicht verwirklichen. Zudem sind bei der bekannten Einrichtung auch die übrigen Merkmale des Anspruchs 1 nicht verwirklicht.

Ausgehend von diesem Stand der Technik liegt der Erfindung die Aufgabe zugrunde, einem bekannten Plastifizierzylinder bedarfsweise ein Mehr an Energie auf einfache Weise zuzuführen.

Diese Aufgabe wird erfindungsgemäß durch die Merkmale des Anspruchs 1 gelöst.

Dies geschieht dadurch, daß lediglich der Düsenkörper abgenommen wird und ein Einsatz zur Verlängerung des Plastifizierzylinders an seiner Stelle eingesetzt wird. Auf diese Weise läßt sich zudem auch eine erhöhte Homogenisierung des Materials dadurch erreichen, daß der Förderstrom nun über eine größere Länge erfolgt. Die Verlängerung kann somit sowohl durch verbesserte Plastifizierung des Kunststoffmaterials als auch durch erhöhte Homogenisierung zur qualitativen Verbesserung der Spritzteile beitragen, insbesondere wenn auf dem verlängerten Bereich ein Mehr an Energie in Form von Bewegungs- oder Wärmeenergie zugeführt werden kann.

Bei einer Ausbildung nach Anspruch 2 wird als Anschlußorgan eine Verbindungsmuffe verwendet, die wie aus der DE-PS 41 05 730 bekannt, einen einfachen, schnellen und mit geringen physischen Kräften und mit einfachem Werkzeug möglichen Wechsel bzw. Austausch des Einsatzes gegen eine übliche Düse ermöglicht. Wie dort sind die Innenbereiche der Verbinungsmuffe den kritischen Hitzebereichen entzogen und die 'eigentliche' Anpressung erfolgt über Gewindebolzen, die in der Verbindungsmuffe gelagert sind. Zwar stellt die beim Düsenwechsel nicht zu lösende Gewindeverbindung zwischen Verbindungsmuffe und Plastifizierzylinder eine thermische Brücke dar, doch liegt die Temperatur im Bereich der Gewindebolzen weit unter der Temperatur in Düsenkörper und Plastifizierzylinder. Ein Vordringen von korrosiven Gasen, die eventuell aus dem plastifizierten Material austreten, in den Bereich der Gewindegänge ist nahezu ausgeschlossen. Ein 'Verbacken' der ineinandergreifenden Gewindegänge ist nicht möglich.

Insofern kann der Düsenkörper, aber auch der Einsatz bei einem wesentlich geringeren Einsatz an physischer Kraft sowie mit leichtem und leicht zu handhabendem Werkzeug gewechselt oder ersetzt werden, zumal der erforderliche axiale Anpreßdruck durch eine Vielzahl von Gewindebolzen erzeugt wird und somit der jeweilige maximale Einsatz von Werkzeug und physischer Kraft auf viele einzelne Gewindebolzen verteilt ist. Das Montage- bzw. Service-Personal kann daher das Werkzeug praktisch in einer Aktentasche mitführen.

Um das Vielfache geringere Anpreßdrücke an den feinbearbeiteten Stirnflächen von Düsenkörper oder Einsatz und Plastifizierzylinder sind erforderlich, wenn nach Anspruch 3 diese konkreten Anlageflächen wesentlich verringert sind. Dadurch ist das Problem des Wechsels prinzipiell entschärft, weil wesentlich geringere Anpreßdrücke zu erzeugen und daher auch geringere Verspannungen in den Gewinden zu verzeichnen sind.

Verfügt der Einsatz nach Anspruch 4 stirnseitig über Anschlußorgane, die denen des Plastifizierzylinders entsprechen, so läßt sich ohne weiteres der abgenommene Düsenkörper wieder unmittelbar auf den Einsatz aufsetzen. Allerdings ist es statt dessen auch möglich, einfach den Einsatz, der ja eine Verlängerung des Plastifizierzylinders darstellt, und den zugehörigen Düsenkörper einstückig auszubilden.

Um zudem stets die Verwendung des Plastifizieraggregats mit oder ohne Verschlußdüse zu ermöglichen, besitzt der Einsatz nach den Ansprüchen 5 bis 6 bereits Aufnahmebohrungen für Thermofühler und Düsennadel, die den entsprechenden Aufnahmebohrungen des Plastifizierzylinders entsprechen. In diesem Falle muß dann, abgesehen von einer Verlängerung, die Betätigung der Verschlußnadel lediglich parallel nach unten versetzt werden.

Die gleichsam zu verlängernde Förderschnecke, die nunmehr ungefähr eine Länge aufweist, die dem 25-fachen des Schneckendurchmessers entspricht, kann entweder einstückig ausgebildet sein, oder es kann eine übliche Förderschnecke, die üblicherweise die 20-fache Länge des Schneckendurchmessers aufweist, durch entsprechende Einsatzstücke gemäß den Ansprüchen 8 bis 10 verlängert werden. Als Einsatzstücke kommen dabei sowohl weitere Schneckenabschnitte in Frage, als auch alternativ dazu Mischabschnitte. Gleichgültig, welche Art von Einsatzstück verwendet wird, so ist stets durch entsprechende Schäfte und Ausnehmungen gewährleistet, daß die Schnecke auf einfache Weise durch Zusammenfügen der Einzelteile verlängert werden kann. Sämtliche Verbindungen sind so ausgebildet, wie die bereits an der Spritzgießmaschine vorzufindende Verbindung zwischen Rückstromsperre und Förderschnecke, die aus einem Schaft an der Rückstromsperre und einer dazugehörigen Ausnehmung an der Förderschnecke besteht. Je nach Wunsch kann der Mischabschnitt direkt an die 'Standard'-Förderschnecke anschließen, oder es kann zunächst ein weiterer Schneckenabschnitt als Einsatzstück vor dem eigentlichen Mischabschnitt eingesetzt werden.

Wird der Mischabschnitt dabei entsprechend Anspruch 10 ausgebildet, so kann eine erhöhte Durchmischung erreicht werden, wie sie insbesondere beim Beimischen von Farbstoffen zu einem Grundmaterial erwünscht ist. Der Mischabschnitt besteht dabei abweichend von üblichen Mischelementen nicht aus Mischerarmen, sondern aus scheibenförmigen Mischelementen, die den Zylinderraum nahezu vollständig ausfüllen. Um dennoch eine Durchmischung und ein Weiterbefördern des Kunststoffmaterials zu ermöglichen, besitzen diese Mischelemente randständige Nuten, die schraubenförmig versetzt auf den einzelnen scheibenförmigen Mischelementen angeordnet sind und den Durchtritt des herangeförderten Materials erlauben. Der Versatzwinkel in Drehrichtung der Förderschnecke ist dabei jedoch gegenüber dem Steigungswinkel der Förderschnecke herabgesetzt, so daß der Drall, der dem Material durch die Beförderung entlang der Förderschnecke aufgezwungen worden ist, systematisch unterbrochen wird und dadurch eine erhöhte Durchmischung erreicht werden kann.

Dabei ist ferner die Fuge zwischen dem Einsatz und dem Plastifizierzylinder so weit nach hinten versetzt, daß sie stets an den Niederdruckraum angrenzt, selbst wenn die Rückstromsperre beim Axialhub maximal zurückgestellt wird (üblicherweise etwa um das 3-fache des Schneckendurchmessers).

Nach Anspruch 11 kann somit ein Baukastensystem geschaffen werden, das die Bereitstellung von Varianten ohne eine ins Gewicht fallende Erhöhung der Fertigungskosten ermöglicht. Auf diese Weise sind nach dem Baukastenprinzip mir nur wenigen unterschiedlichen Bauteilen bei relativ geringer Lagerhaltung Varianten zu fertigen, zu denen die erforderlichen Heizorgane, Düsenverschlußorgane und sonstigen Steuerungsorgane gleichermaßen passen.

Weitere Vorteile ergeben sich aus den Unteransprüchen.

Nachstehend wird die Erfindung anhand der Zeichnung an zwei Ausführungsbeispielen erläutert.

Es zeigen:

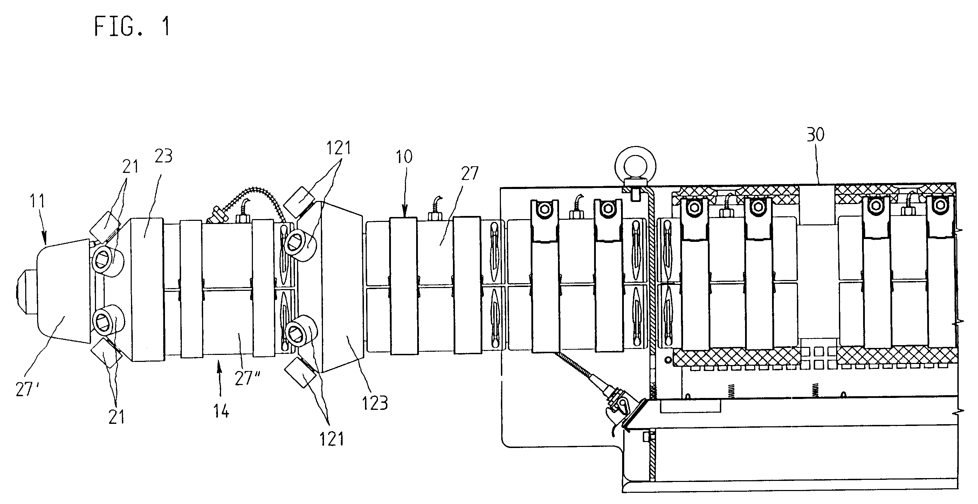

- Fig. 1: den Plastifizierzylinder in Seitenansicht,
- Fig. 2: den durch den Einsatz verlängerten Plastifizierzylinder teilweise geschnitten in einer Seitenansicht nach Fig. 1,
- Fig. 3: die Rückstromsperre in vergrößerter Darstellung,
- Fig.4 und 5: verschiedene Einsatzstücke in vergrößerter Darstellung,
- Fig. 6: die aus den Teilen von Fig. 3,4 und 5 zusammengesetzte Förderschnecke,
- Fig. 7: die Ausgangsposition der Darstellung von Fig. 2 vor Einfügung des Einsatzes,
- Fig. 8: eine Ansicht nach Fig. 7 unter Einsatz einer Verschlußdüse und
- Fig. 9: eine Ansicht entsprechend Fig. 2 unter Einsatz einer Verschlußdüse.

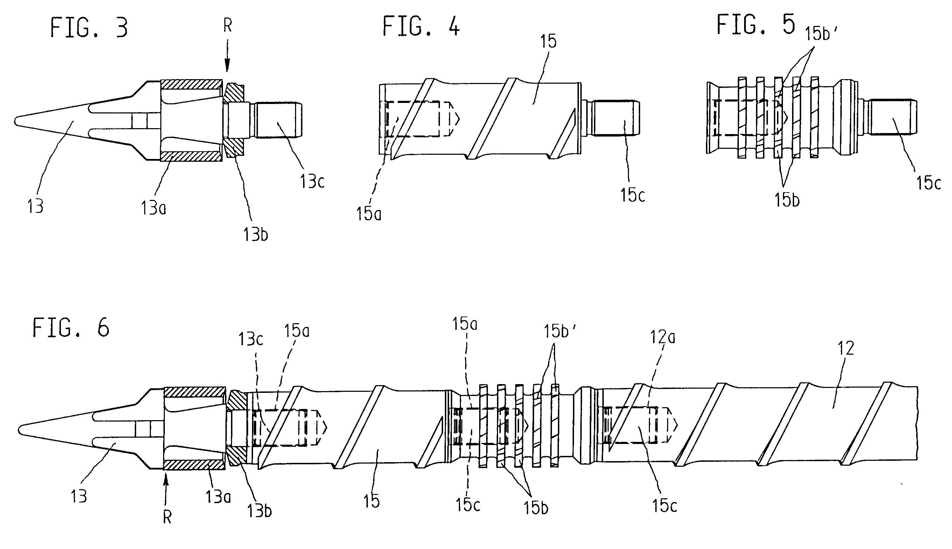

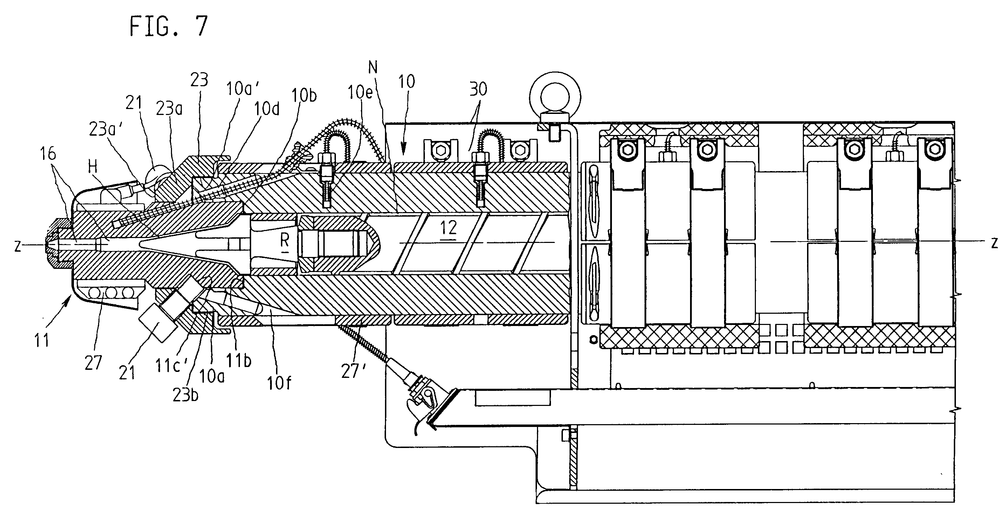

Beim Spritzbetrieb transportiert eine rotierbare Förderschnecke 12 im beheizbaren Plastifizierzylinder 10 den plastifizierten Kunststoff in einen Hochdruckraum H vor die zurückweichende Förderschnecke. Sodann wird der Kunststoff durch einen axialen Hub der Förderschnecke 12 über den Düsenkanal 16 in eine Spritzgießform eingespritzt. Eine bei diesem Hub wirksame Rückstromsperre R schließt den sich beim Hub stetig verkleinernden Hochdruckraum H gegenüber einem die Förderschnecke 12 enthaltenden Niederdruckraum N ab. Der zylindrische Hochdruckraum H verjüngt sich in einem axialen Abschnitt a des Düsenkörpers 11 bis auf die lichte Weite des Düsenkanals 16. Düsenkörper 11 oder Einsatz 14 und Plastifizierzylinder 10 sind mittels einer Vielzahl von auf einer Kreislinie angeordneter Gewindebolzen 21,121 im Bereich feinbearbeiteter Stirnflächen 11b,14b und 10b axial gegeneinander preßbar. Eine den Plastifizierzylinder 10 umschließende und den Düsenkörper 11 oder den Einsatz 14 teilweise axial übergreifende Verbindungsmuffe 23,123 ist am Plastifizierzylinder 10 oder am Einsatz 14 befestigt. Die Befestigung ist dadurch bewirkt, daß die Verbindungsmuffe 23,123 mit Hilfe eines Innengewindes in ein Außengewinde 10a', 14a' des Flansches 10a,14a des Plastifizierzylinders 10 oder des Einsatzes 14 eingreift. Die mit Innengewinden 23b,123b von Bohrungen mit der Verbindungsmuffe 23,123 in Eingriff stehenden und dadurch axial abgestützten Gewindebolzen 21,121 greifen stirnseitig an Preßflächen 11c',14c' des Düsenkörpers 11 oder des Einsatzes 14 an. Die Gewindebolzen 21,121 schließen einen Winkel von ca. 45° zur Zylinderachse z-z ein und durchsetzen einen sich radial erstreckenden Flansch 23a der Verbindungsmuffe 23. Stirnseitig tauchen die Gewindebolzen 21,121 in Eingriffsmulden 11c,14c des Düsenkörpers 11 oder des Einsatzes 14 ein (Fign. 6, 7 bzw. 9,10). An der Basis dieser Eingriffsmulden 11c, 14c liegen die Preßflächen 11c' ,14c'.

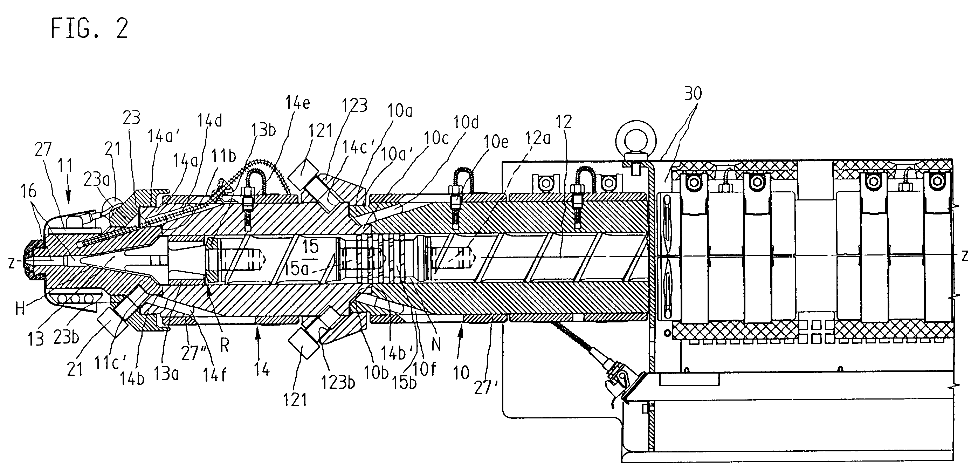

Statt Verbindungsmuffen 23,123 und Gewindebolzen 21,121 können auch andere Anschlußorgane vorgesehen werden. So können Einsatz 14, Plastifizierzylinder 10 und Düsenkörper 11 auch miteinander verschraubt sein, oder es kann, wie im Stand der Technik bekannt, eine Verbindungsmuffe die zu verbindenden Teile übergreifen. Wesentlich ist, daß die Anschlußorgane des Einsatzes mit den Anschlußorganen des Plastifizierzylinders zusammenwirken können, wobei zumindest der Niederdruckraum N Vergrößert wird.
Der Düsenkörper 11 weist eine Ringschulter auf, die bündig mit einer senkrecht zur Zylinderachse z-z stehenden Stirnfläche 23a' des Flansches 23a ist. Der Düsenkörper 11 ist von einem Flansch 10a des Plastifizierzylinders 10 teilweise axial übergriffen. Die Rückstromsperre R umfaßt einen an der Stirnseite der Förderschnecke 12 fixierten Sitzring 13b, einen Kopf 13, der über einen Schaft 13c mit der Förderschnecke 12 verbunden ist, sowie einen Dichtring 13a. Letzterer ist zwischen dem Sitzring 13b und dem Kopf 13 begrenzt axial verschieblich. Der Dichtring liegt bei gesperrtem Rückstrom rückseitig auf einer Stirnfläche des Sitzringes 13b auf, wie beispielsweise aus den Fign. 2, 6 ersichtlich.

Eine ausreichende Abdichtung der Fuge zwischen dem Düsenkörper 11 und dem Plastifizierzylinder 10 oder dem Einsatz 14 ist bei geringerem Anpreßdruck dadurch erreichbar, daß die Stirnflächen 11b, 10b, 14b von Düsenkörper 11, Plastifizierzylinder 10 und Einsatz 14 nur in einem kleinen, an die innere Mantelfläche des Plastifizierzylinders 10 angrenzenden ringförmigen Bereich feinbearbeitet sind.

Eine Verlängerung des Plastifizierzylinders kann dadurch erreicht werden, daß als Anschlußorgan an das Außengewinde 10a' eines Flansches 10a des Plastifizierzylinders anstelle der Verbindungsmuffe 23 nun die Verbindungsmuffe 123 somit also an die bereits vorhandenen Anschlußorgane des Plastifizierzylinders angeschlossen wird. Diese weitere Verbindungsmuffe 123 umschließt den Plastifizierzylinder im Bereich des Niederdruckraumes, so daß die Fuge zwischen den Stirnflächen 14b', 10b selbst bei maximaler rückwärtiger Stellung der Förderschnecke 12 nie mit dem Hochdruckraum H in Verbindung steht. Grundsätzlich ist aber auch die Fuge zwischen den Stirnflächen 11b und 14b von Düsenkörper 11 und Einsatz 14 so gelegt, daß sie an den Niederdruckraum anschließt.

Der Einsatz ist dabei einem Düsenkörper insoweit nachgebildet, daß die Stirnflächen 10b,14b' von Plastifizierzylinder und Einsatz so in einer stirnseitigen Ausnehmung 10c aufeinanderstoßen, daß der die Förderschnecke aufnehmende Zylinderraum eine durchgehende Mantelfläche erhält. Der Einsatz 14 verfügt stirnseitig über einen Flansch 14a mit Außengewinde 14a' und Stirnfläche 14b. Dabei greift das Außengewinde 14a' in das Innengewinde der Verbindungsmuffe 23 zum Anschluß des Düsenkörpers in bereits beschriebener Weise ein. Alternativ besteht jedoch auch die Möglichkeit, Einsatz 14 und Düsenkörper 11 einstückig auszubilden.

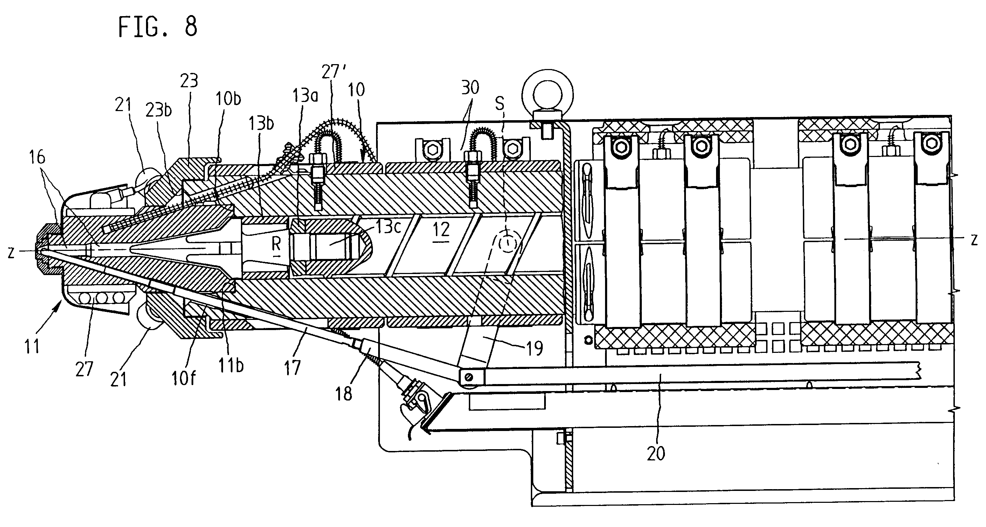

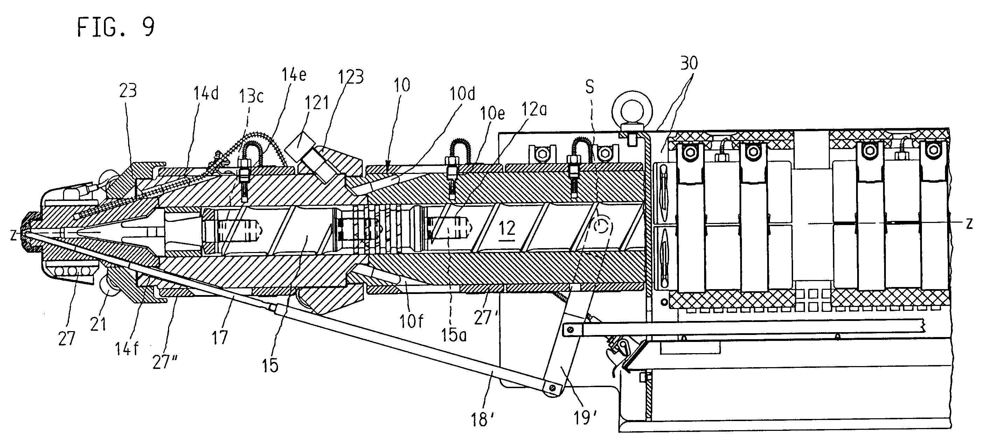

Beim Ausführungsbeispiel der Figur 9 wird der Plastifizierzylinder zusammen mit einer Verschlußdüse verwendet. Um diese Anwendung jederzeit zu ermöglichen, besitzen sowohl der Plastifizierzylinder 10, als auch der Einsatz 14, in Figur 2 funktionslose Aufnahmebohrungen 10d,10e,10f bzw. 14d,14e,14f zur Aufnahme der Thermofühler bzw. der Düsennadel 17. Somit kann selbst bei einer Verlängerung auf einfache Weise dennoch der Verschluß des Düsenkanals bewirkt werden. Wie sich aus einem Vergleich der Figuren 8 und 9 ergibt, muß dazu lediglich der Schwenkhebel 19 durch den Schwenkhebel 19' ersetzt werden, der eine tiefere Anlenkung der nunmehr gegenüber der ursprünglichen Anlenkstange 18 verlängerten Anlenkstange 18' ermöglicht. Bei diesem erforderlichen Umbau bleibt dennoch der Angriffspunkt für die Betätigungsstange 20 stets in gleichem Abstand vom Schwenkpunkt S des Schwenkhebels 19,19'.

In diesem verlängerten Plastifizierzylinder kann nunmehr entweder eine verlängerte Förderschnecke Verwendung finden, oder eine mehrstückige Förderschnecke, die aus der ursprünglichen Förderschnecke 12 und verschiedensten Einsatzstücken 15 zusammengesetzt ist. Insgesamt ist eine Verlängerung um das Fünffache des Durchmessers der Förderschnecke bewirkt, so daß nunmehr eine wirksame Länge der Förderschnecke vom 25-fachen des Schneckendurchmessers erreicht ist. Bei Verwendung von zusammengesetzten Förderschnecken, kann in der Ausnehmung 12a, in der üblicherweise der Schaft 13c der Rückstromsperre befestigt ist, nun ein entsprechender Schaft der Einsatzstücke 15 eintauchen. Die Einsatzstücke 15 verfügen zudem stirnseitig über entsprechende Ausnehmungen 15a, in die entweder weitere Einsatzstücke oder die Rückstromsperre mit ihrem Schaft 13c bzw. 15c eintauchen kann. Durch die Verlängerung kann sowohl die erhöhte Zufuhr von Energie als auch eine erhöhte Homogenisierung erreicht werden. Um die Homogenisierung und Durchmischung weiter zu steigern, kann aber auch an beliebiger Stelle im Bereich der Verlängerung als Einsatzstück ein Mischabschnitt eingesetzt werden, der über Mischelemente verfügt.

Dabei werden als Mischelemente 15b Scheiben verwendet, die senkrecht zur Zylinderachse z-z angeordnet sind und deren Durchmesser ungefähr dem Durchmesser der Schnecke entspricht. Um dennoch durch diese Scheiben hindurch eine Weiterbeförderung des Materialstroms zu erreichen, besitzen die Scheiben randständige, nutenförmige Ausnehmungen 15b', die in Drehrichtung um einen bestimmten Winkel gegeneinander versetzt sind. Das Material wird also kommend von der Förderschnecke durch diese Ausnehmungen hindurch weiter nach vorne gedrückt. Dabei stehen diese Ausnehmungen in einem Winkel zueinander, der gegenüber der Zylinderachse kleiner ist, als der Steigungswinkel der Förderschnecke. Durch diese Anordnung wird erreicht, daß der von der Beförderung durch die Förderschnecke vorbestimmte Drall im Bereich des Mischabschnittes unterbrochen wird und dadurch eine erhöhte Durchmischung stattfinden kann.

Das bedarfsweise gewünschte Mehr an Energie kann zusätzlich zu den Heizmanschetten 27,27' von Düsenkörper 11 Plastifizierzylinder 10 über die Heizmanschette 27'' des Einsatzes 14 aufgebracht werden. Im übrigen ist der Plastifizierzylinder 10 von einer Schutzabdeckung 30 umschlossen.

## Patentansprüche

1. Beheizbarer Plastifizierzylinder (10) einer Kunststoff-Spritzgießmaschine mit beheizbarem Düsenkörper (11) und rotierbarer Förderschnecke (12) mit einer Rückstromsperre (R) und mit einem die Förderschnecke (12) enthaltenden Niederdruckraum (N), mit dem unter Verringerung des Querschnitts der Düsenkanal (16) des Düsenkörpers (11) in Verbindung steht, sowie mit Anschlußorganen für den Anschluß des Düsenkörpers an den Plastifizierzylinder, dadurch gekennzeichnet, daß der Plastifizierzylinder (10) durch einen Einsatz (14) verlängerbar ist, dessen rückseitige Anschlußorgane mit den am Plastifizierzylinder (10) für den Anschluß des Düsenkörpers (11) vorgesehenen Anschlußorganen in Verbindung stehen und den Anschlußorganen des Düsenkörpers entsprechen, wobei die Verlängerung zumindest den Niederdruckraum (N) des Plastifizierzylinders (10) vergrößert.

2. Plastifizierzylinder nach Anspruch 1, dadurch gekennzeichnet, daß er einen Hochdruckraum (H) aufweist, der sich in einem axialen Abstand (a) des Düsenkörpers (11) bis auf die lichte Weite des Düsenkanals (16) verjüngt.

3. Plastifizierzylinder nach Anspruch 1 oder 2, dadurch gekennzeichnet, daß als Anschlußorgane den Düsenkörper (11) und den Einsatz (14) teilweise axial übergreifende Verbindungsmuffen (23,123) am Plastifizierzylinder (10) und am Einsatz (14) befestigt sind, und daß eine Vielzahl von etwa auf einer Kreislinie angeordneten Gewindebolzen (21,121), die einen Winkel zur Zylinderachse (z-z) einschließen, einen sich radial erstreckenden Flansch (23a,123a) der Verbindungsmuffen (23,123) durchsetzen und mit Innengewinden (23b,123b) der Verbindungsmuffen (23,123) in Eingriff stehen und dadurch axial abgestützt sind und stirnseitig in Eingriffsmulden (11c,14c) des Düsenkörpers (11) und des Einsatzes (14) eintauchen, an deren Basis Preßflächen (11c',14c') liegen.

4. Plastifizierzylinder nach einem der vorhergehenden Ansprüche, dadurch gekennzeichnet, daß die Stirnflächen (11b,111b; 10b,110b) von Düsenkörper (11;111) und Plastifizierzylinder (10;110) nur in einem kleinen, an die innere Mantelfläche des die Förderschnecke aufnehmenden Niederdruckraum (N) des Plastifizierzylinders (10;110) angrenzenden ringförmigen Bereich feinbearbeitet sind, wobei der Einsatz (14) unter Bildung der durchgehenden Mantelfläche in eine stirnseitige Ausnehmung (10c) des Plastifizierzylinders (10) eingreift.

5. Plastifizierzylinder nach einem der vorhergehenden Ansprüche, dadurch gekennzeichnet, daß der Einsatz (14) stirnseitig weitere Anschlußorgane (Flansch 14a mit Außengewinde 14a') aufweist, die den am Plastifizierzylinder (10) für den Anschluß des Düsenkörpers (11) vorgesehenen Anschlußorganen entsprechen.

6. Plastifizierzylinder nach einem der vorhergehenden Ansprüche, dadurch gekennzeichnet, daß der Einsatz (14) über dem Plastifizierzylinder (10) entsprechende Aufnahmebohrungen (14d,14e,14f) für Thermofühler und Düsennadel (17) verfügt.

7. Plastifizierzylinder nach einem der vorhergehenden Ansprüche, dadurch gekennzeichnet, daß bei Verwendung einer Verschlußdüse am Einsatz (14) des Plastifizierzylinders (10) die Düsennadel (17) über eine verlängerte Anlenkstange (18') und über einen verlängerten Schwenkhebel (19') angelenkt ist, wobei eine Betätigung der Düsennadel (17) durch die Aufnahmebohrung (14f) im Einsatz (14) des Plastifizierzylinders (10) erfolgt und daß sich der Angriffspunkt der Betätigungsstange (20) am Schwenkhebel (19') bei Verwendung des Einsatzes (14) ungefähr im gleichen Abstand zum Schwenkpunkt (S) des Schwenkhebels befindet wie ohne Verwendung des Einsatzes.

8. Plastifizierzylinder nach einem der vorhergehenden Ansprüche, dadurch gekennzeichnet, daß im Plastifizierzylinder (10) und Einsatz (14) eine verlängerte Förderschnecke derart aufgenommen ist, daß auch bei maximaler rückwärtiger Ausgangslage der Förderschnecke die Fuge zwischen Einsatz (14) und Düsenkörper (11) an den Niederdruckraum (N) angrenzt.

9. Plastifizierzylinder nach Anspruch 8, dadurch gekennzeichnet, daß die Förderschnecke (12) durch Einsatzstücke (15) verlängert ist, die rückseitig über einen Schaft verfügen, der dem Schaft der Rückstromsperre (R) entspricht, und damit in entsprechende Ausnehmungen (12a) eintauchen und stirnseitig bedarfsweise Ausnehmungen (15a) aufweisen, in denen der Schaft weiterer Einsatzstücke (15) oder der Schaft der Rückstromsperre (R) aufnehmbar ist.

10. Plastifizierzylinder nach Anspruch 9, dadurch gekennzeichnet, daß als Einsatzstück (15) ein Mischabschnitt einsetzbar ist (Fig. 5).

11. Plastifizierzylinder nach Anspruch 10, dadurch gekennzeichnet, daß der Mischabschnitt senkrecht zur Zylinderachse (z-z) stehende, scheibenförmige Mischelemente (15b) aufweist, deren Durchmesser ungefähr dem Durchmesser der Schnecke (12) entspricht, und die randständige, nutenförmige Ausnehmungen (15b') aufweisen, die von Scheibe zu Scheibe in der beim Fördern auftretenden Drehrichtung um einen Winkel versetzt sind.

12. Bausatz für den Aufbau eines Plastifizierzylinders mit Förderschnecke (12) einer Kunststoff-Spritzgießmaschine nach einem der vorhergehenden Ansprüche, der umfaßt:
a) Plastifizierzylinder (10), die für den Anschluß von Düsenkörper (11) oder Einsätzen (14) vorgesehen sind,
b) Düsenkörper (11),
c) Einsätze zum Anschluß zwischen Plastifizierzylinder und Düsenkörper ,
d) eine Förderschnecke (12), die in einem Niederdruckraum (N) angeordnet ist, der von einer an der Förderschnecke (12) abnehmbar befestigten Rückstromsperre (R) begrenzt ist, sowie
e) Einsatzstücke (15), die zum Anschluß zwischen Förderschnecke (12) und Rückstromsperre vorgesehen sind.
